# EUROPÄISCHE PATENTSCHRIFT

(11) **EP 0 702 842 B1**
(45) Veröffentlichungstag und Bekanntmachung des Hinweises auf die Patenterteilung: **19.03.1997**
(21) Anmeldenummer: 94916889.2
(22) Anmeldetag: 06.06.1994
(51) Int. Cl.: H01H 25/06, B60Q 1/00, B60K 37/02

(54) **KRAFTFAHRZEUG-LICHTSCHALTER**
MOTOR VEHICLE LIGHT SWITCH
COMMUTATEUR D'ECLAIRAGE POUR AUTOMOBILES

(30) Priorität: 12.06.1993 DE 4319543
(43) Veröffentlichungstag der Anmeldung: 27.03.1996
(73) Patentinhaber: EATON CONTROLS GmbH & Co. KG, D-55411 Bingen (DE)
(72) Erfinder: DEL ROSSO, Vittorio, D-55597 Wöllstein (DE)
(74) Vertreter: Becker, Bernd, Dipl.-Ing.
(86) Internationale Anmeldenummer: DE9400640
(87) Internationale Veröffentlichungsnummer: WO9429890

(56) Entgegenhaltungen:
- DE-A- 3 023 905
- DE-A- 3 031 711
- DE-A- 4 036 671

## Beschreibung

Die Erfindung bezieht sich auf einen Kraftfahrzeug-Lichtschalter mit einem in einem Gehäuse untergebrachten Dreh-Zug-Schalter für das Stand- sowie Fahrtlicht und die Innenbeleuchtung.

Derartige Schalter zum Betätigen der Stand- sowie Fahrtlichtlampen durch Drehen des Betätigungsknopfes und zum Betätigen der Lampen der Innenbeleuchtung durch Ziehen des Betätigungsknopfes sind in den verschiedensten Ausführungen bekannt (z.B. DE-A1-3 023 905, DE-A1- 4 036 671, DE-A1-3 031 711). Ein solcher Schalter wird als vormontierte Baueinheit in das Armaturenbrett eines Kraftfahrzeuges eingesetzt. Zusätzlich zu diesem Dreh-Zug-Schalter müssen in dem Armaturenbrett an unterschiedlichen Stellen ein Ein-/Aus-Schalter für das Nebellicht, ein Ein-/Aus-Schalter für das Nebelschlußlicht, eine Regulierschalter für die Leuchtweite und ein Regulierschalter für die Armaturenbrettbeleuchtung montiert werden. Diese Anordnung der Schalter erfordert zum einen einen gesonderten Einbauraum für jeden einzelnen Schalter und bedingt zum anderen für jeden einzelnen Schalter einen besonderen Montageaufwand. Darüber hinaus liegen die Schalter aufgrund ihrer beabstandeten Positionierung innerhalb des Armaturenbrettes nicht alle gleichzeitig in der Blickrichtung des Kraftfahrzeug-Führers, was das Auffinden eines bestimmten Schalters erschwert.

Der Erfindung liegt daher die Aufgabe zugrunde, einen Kraftfahrzeug-Lichtschalter der eingangs genannten Art zu schaffen, der bei Erfüllung sämtlicher Lichtschaltfunktionen eines Kraftfahrzeuges möglichst kompakt gebaut ist.

Diese Aufgabe wird erfindungsgemäß dadurch gelöst, daß das Gehäuse zusätzlich einen Regulierschalter für die Leuchtweite, einen Ein-/Aus-Schalter für das Nebellicht, einen Ein-/Aus-Schalter für das Nebelschlußlicht und einen Regulierschalter für die Armaturenbrettbeleuchtung aufnimmt.

Durch diese Maßnahmen ergibt sich ein kombinierter Kraftfahrzeug-Lichtschalter für alle Lichtschaltfunktionen eines Kraftfahrzeuges, der als vormontierte Baueinheit leicht und schnell in eine zugehörige Öffnung des Armaturenbrettes des Kraftfahrzeuges einsetzbar ist, d.h. es müssen nicht mehr verschiedene Einzelschalter für die unterschiedlichen Lichtschaltfunktionen montiert werden, sondern es ist lediglich nur noch die Montage des kombinierten Kraftfahrzeug-Lichtschalters nach der Erfindung erforderlich. Da sämtliche Schalter in einem gemeinsamen Gehäuse untergebracht sind, bilden sie eine äußerst kompakte Anordnung, die nur relativ wenig Einbauraum benötigt. Weiterhin liegen nunmehr sämtliche Einzelschalter unmittelbar in einer Blickrichtung des Kraftfahrzeug-Führers, wodurch dieser rasch den gewünschten Einzelschalter des kombinierten Kraftfahrzeug-Lichtschalters erkennen kann.

Zur einfachen Montage des Kraftfahrzeug-Lichtschalters ist nach einer vorteilhaften Ausgestaltung der Erfindung das Gehäuse über gegenüberliegende Haltefedern in eine entsprechende Öffnung des Armaturenbrettes des Kraftfahrzeuges eingeklipst.

Um eine bedienerfreundliche Handhabung des Kraftfahrzeug-Lichtschalters sicherzustellen, sind nach einer vorteilhaften Weiterbildung der Erfindung unterhalb des Dreh-Zug-Schalters nebeneinanderliegend der Regulierschalter für die Leuchtweite, der Ein-/Aus-Schalter für das Nebellicht, der Ein-/Aus-Schalter für das Nebelschlußlicht und der Regulierschalter für die Armaturenbrettbeleuchtung angeordnet.

Bevorzugt sind hierbei die beiden Regulierschalter gegenüberliegend zu den mittig nebeneinanderliegenden Ein-/Aus-Schaltern vorgesehen.

Zweckmäßigerweise ist den einzelnen Schaltern jeweils eine Such- und Funktionsbeleuchtung zugeordnet. Nach einer vorteilhaften Weiterbildung der Erfindung sind die Lichtquellen für die Such- und Funktionsbeleuchtung der Schalter auf einer gemeinsamen Leiterplatte angeordnet, und die Lichtquellen beaufschlagen über Lichtleiter die opaken Suchsymbole und die opaken Funktionssymbole der Schalter. So ergibt sich eine montagefreundliche Anordnung der Lichtquellen, da dieselben auf der Leiterplatte vormontiert werden können.

Bei einer vorteilhaften Weiterbildung des Erfindungsgegenstandes stützt sich die Leiterplatte auf einem in das Gehäuse eingeklipsten, mit Anschlußkontakten versehenen Sockel ab, wobei die Anschlußkontakte über Klemmeinrichtungen mit der Leiterplatte verbunden sind. Hierdurch ist eine schnelle Montage der gemeinsamen Leiterplatte für alle Schalter gewährleistet.

Weiterhin ist bevorzugt vorgesehen, daß der dem Dreh-Zug-Schalter zugeordnete Lichtleiter drehfest und axial lose auf einer drehbaren sowie axial verschiebbaren Schaltachse des Dreh-Zug-Schalters angeordnet ist. Hierdurch ergibt sich eine einfache und funktionsgerechte Montage dieses Lichtleiters. Zweckmäßigerweise weist der Lichtleiter des Dreh-Zug-Schalters eine dem Suchsymbol im Betätigungsknopf zugeordnete Lichtaustrittsspitze und eine in Abhängigkeit von der Stellung der Schaltachse einem bestimmten von mehreren Funktionssymbolen im Gehäuse zugeordnete Lichtdurchgangsöffnung oberhalb der zugehörigen Lichtquelle in einem kreissegmentförmigen, mit einem schwach lichtdurchlässigen Auftrag versehenen Flansch auf. Durch diese Maßnahmen ist eine einwandfreie Ausleuchtung des Suchsymbols und des bestimmten Funktionssymbols gewährleistet, wobei gleichzeitig noch eine schwache Ausleuchtung der übrigen Funktionssymbole gegeben ist.

Damit die Anzahl der notwendigen Lichtleiter reduziert werden kann, ist bei einer weiteren Ausgestaltung der erfindungsgemäßen Lösung für die Suchbeleuchtung der Regulierschalter und der Ein-/Aus-Schalter ein gemeinsamer Lichtleiter vorgesehen, über den gleichzeitig die Funktions- und Suchbeleuchtung der Regulierschalter beaufschlagbar ist. Für die Funktionsbeleuchtung der Ein-/Aus-Schalter ist bevorzugt jeweils ein gesonderter Lichtleiter vorgesehen.

Zur funktionsgerechten Lichtübertragung weist nach einer weiteren Ausgestaltung der Erfindung der gemeinsame Lichtleiter zum einen zwei bis zu den im Gehäuse angeordneten Suchsymbolen geführte Lichtleitstäbe und zum anderen zwei in die Böden der Ein-/Aus-Schalter hineinragende Lichtleitstäbe auf, die mit in den Ein-/Aus-Schaltern eingesetzten Lichtleitstäben korrespondieren, die jeweils dem in einer Drucktaste des entsprechenden Ein-/Aus-Schalters angeordneten Suchsymbol zugeordnet sind. Weiterhin weist bevorzugt der gemeinsame Lichtleiter zwei, der Funktionsbeleuchtung der Regulierschalter zugeordnete Lichtaustrittringe auf, wobei jeder Lichtaustrittring sowohl ein in ein Stellrad des zugehörigen Regulierschalters eingelassenes Funktionssymbol als auch mindestens ein in das Gehäuse eingelassenes Funktionssymbol beaufschlagt. Die Lichtleiter für die Funktionsbeleuchtung der Ein-/Aus-Schalter bestehen zweckmäßigerweise jeweils aus einem Lichtleitstab, der dem in der Drucktaste des entsprechenden Ein-/Aus-Schalters angeordneten Funktionssymbol zugeordnet ist.

Um ein zuverlässiges Schaltverhalten des Dreh-Zug-Schalters zu erreichen, ist bei einer vorteilhaften Ausgestaltung der Erfindung auf der Schaltachse des Dreh-Zug-Schalters ein axial loses, Kontakte tragendes und Anschlußkontakte beaufschlagendes Dreh-Schaltglied für verschiedene Lichtschaltstellungen befestigt, und das freie Ende der Schaltachse wirkt mit einem am Boden des Sockels einseitig gelagerten, federbelasteten und Anschlußkontakte beaufschlagenden Kontakthebel für die Innenbeleuchtung zusammen.

Ferner ist es bevorzugt, wenn jeder Ein-/Aus-Schalter als Drucktastenschalter mit einem schwenkbeweglich gelagerten, federbelasteten Rahmen-Schaltglied ausgebildet ist, dem eine Herzkurven-Steuerung zugeordnet ist, und das eine federbelastete Anschlußkontakte beaufschlagende Kontaktrolle trägt. Hier ist von Vorteil, daß mit den Drucktastenschaltern das Nebellicht und das Nebelschlußlicht zuverlässig geschaltet werden kann. Zur Montageerleichterung sind zweckmäßigerweise die beiden als Drucktastenschalter ausgebildeten Ein-/Aus-Schalter als in einem gemeinsamen Gehäuse vormontierte Baueinheit in das Gehäuse des Kraftfahrzeug-Lichtschalters eingesetzt.

Weiterhin ist es bevorzugt, wenn jeder Regulierschalter ein elektrischer Schalter mit einem über eine Schleiffeder einstellbaren Widerstand, der auf der Leiterplatte aufgebracht ist, zum Steuern der Leistungsaufnahme elektrischer Verbraucher für die Leuchtweiteneinstellung bzw. für die Helligkeitseinstellung der Armaturenbrettbeleuchtung ist. So ergibt sich ein einwandfreies Schalten der Leuchtweiteneinstellung und der Armaturenbrettbeleuchtung.

Der der Erfindung zugrundeliegende Gedanke wird in der nachfolgenden Beschreibung anhand eines Ausführungsbeispieles, das in der Zeichnung dargestellt ist, näher erläutert. Es zeigt:

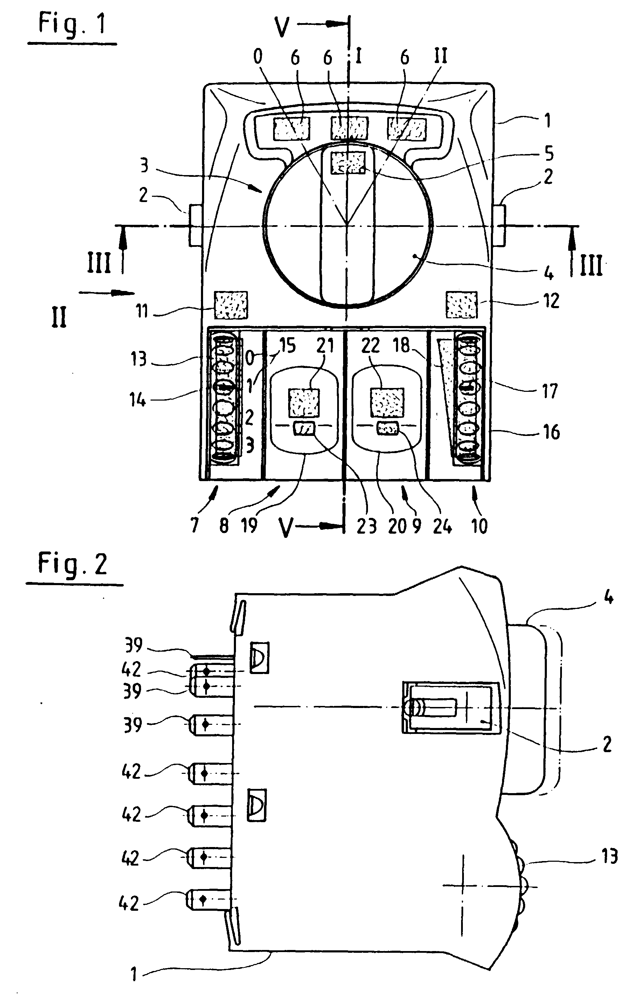

- Fig. 1: eine Draufsicht auf einen Kraftfahrzeug-Lichtschalter,
- Fig. 2: eine Ansicht auf die Darstellung nach Fig. 1 in Richtung des Pfeiles II,

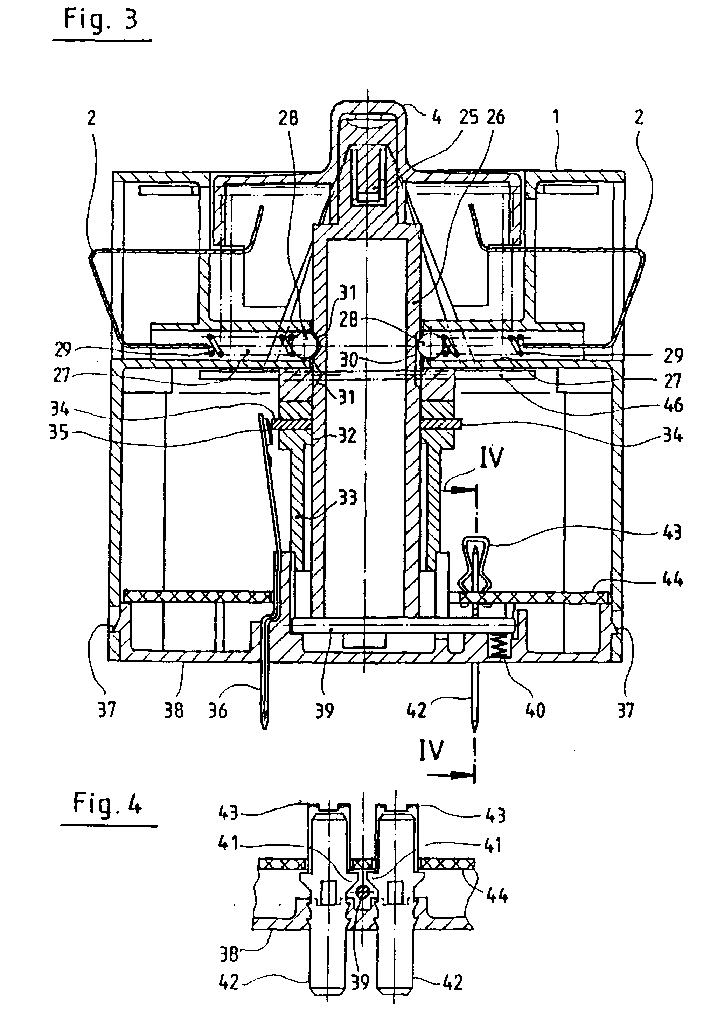

- Fig. 3: einen Schnitt durch den Kraftfahrzeug-Lichtschalter nach Fig. 1 gemäß der Linie III-III im vergrößerten Maßstab,
- Fig. 4: einen Schnitt durch die Darstellung nach Fig. 3 gemäß der Linie IV-IV,

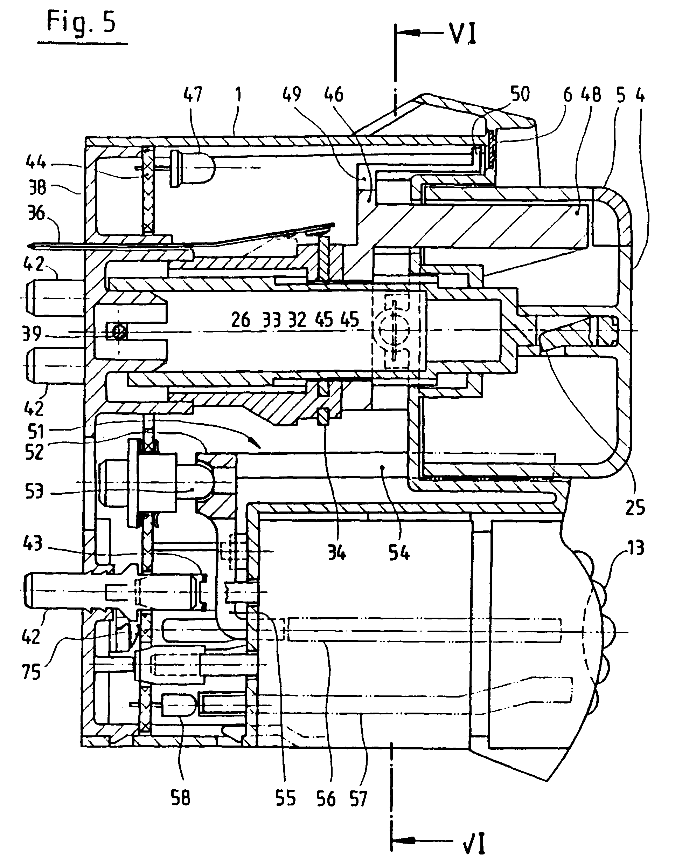

- Fig. 5: einen Schnitt durch den Kraftfahrzeug-Lichtschalter nach Fig. 1 gemäß der Linie V-V im vergrößerten Maßstab,

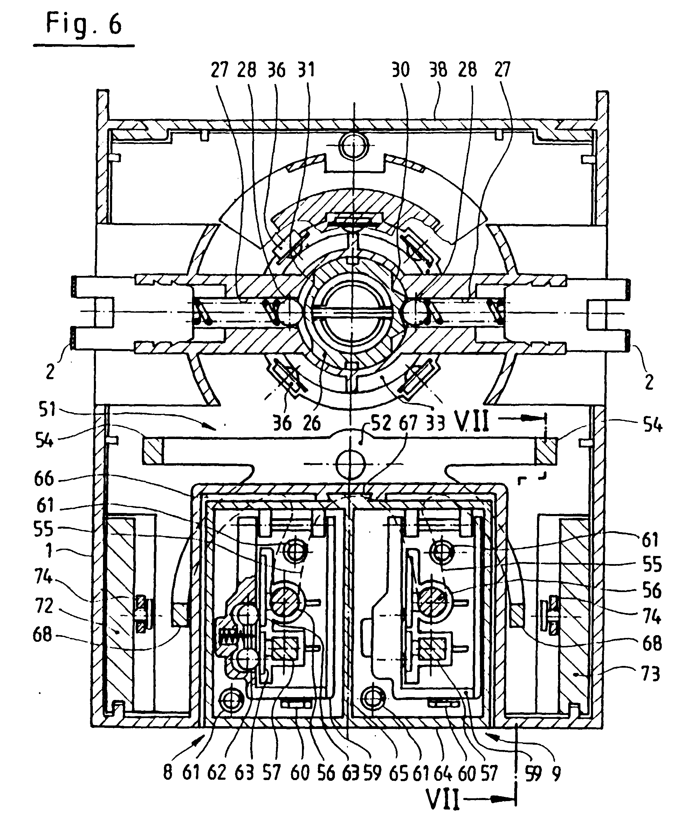

- Fig. 6: einen Schnitt durch die Darstellung nach Fig. 5 gemäß der Linie VI-VI,

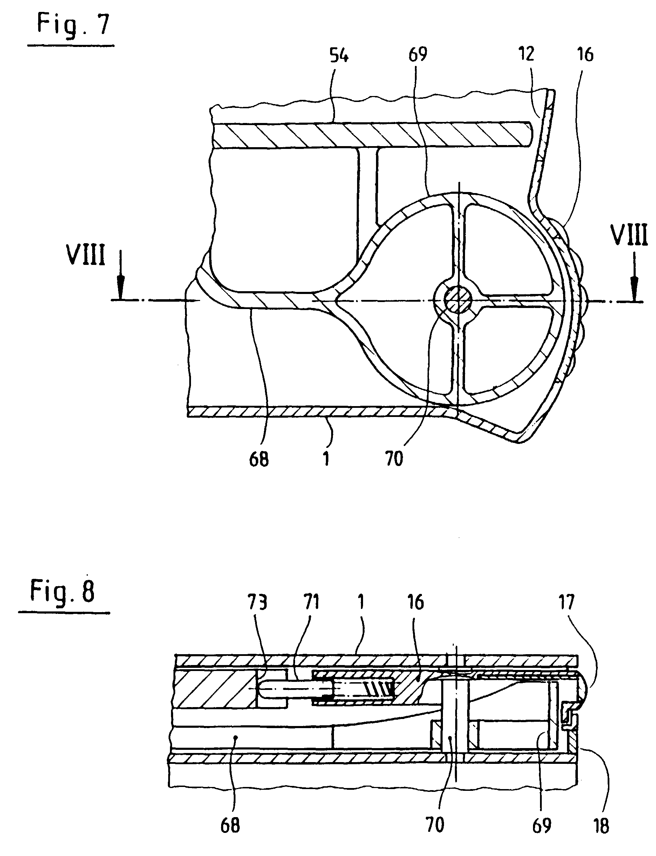

- Fig. 7: einen Schnitt durch die Darstellung nach Fig. 6 gemäß der Linie VII-VII und
- Fig. 8: einen Schnitt durch die Darstellung nach Fig. 7 gemäß der Linie VIII-VIII.

Der Kraftfahrzeug-Lichtschalter weist ein im Querschnitt rechteckförmiges Gehäuse 1 auf, das über in das Gehäuse gegenüberliegend eingesetzte, vorstehende Haltefedern 2 in einer entsprechenden Öffnung eines Armaturenbrettes eines Kraftfahrzeuges gehalten wird. Im oberen Bereich nimmt das Gehäuse 1 einen Dreh-Zug-Schalter 3 zum Betätigen des Stand- sowie Fahrtlichtes und der Innenbeleuchtung auf. Der in Dreh- und Zugrichtung verstellbare Betätigungsknopf 4 ist mit einem opaken Suchsymbol 5 versehen, dem drei nebeneinanderliegende, im Gehäuse 1 angeordnete opake Funktionssymbole 6 gegenüberliegen, die entsprechend den drei Dreh-Schaltstellungen O, I, II des Betätigungsknopfes 4 beleuchtbar sind. In der Schaltstellung O ist das Stand- sowie Fahrtlicht ausgeschaltet, in der Schaltstellung I ist das Standlicht und in der Schaltstellung II ist das Fahrtlicht eingeschaltet, wobei jeweils das entsprechende Funktionssymbol 6 hell aufleuchtet.

Unterhalb des Dreh-Zug-Schalters 3 sind in dem Gehäuse 1 nebeneinanderliegend ein Regulierschalter 7 für die Einstellung der Leuchtweite des Fahrtlichts, ein Ein-/Aus--Schalter 8 für die Betätigung der Nebellichtlampen, ein Ein-/Aus-Schalter 9 für die Betätigung der Nebelschlußleuchte und ein Regulierschalter 10 für die Einstellung der Helligkeit der Armaturenbrettbeleuchtung angeordnet. Oberhalb der beiden Regulierschalter 7, 10 befindet sich im Gehäuse 1 jeweils ein beleuchtbares, opakes Suchsymbol 11 bzw. 12. Das Stellrad 13 des Regulierschalters 7 ist mit einem beleuchtbaren, opaken Funktionssymbol 14 versehen, das mit einem seitlich nebem dem Stellrad 13 im Gehäuse 1 angeordneten, beleuchtbaren opaken Funktionssymbol 15 zusammenwirkt. Ebenso besitzt das Stellrad 16 des Regulierschalters 10 ein beleuchtbares opakes Funtkionssymbol 17, das mit einem neben dem Stellrad 16, im Gehäuse 1 angeordneten beleuchtbaren opaken Funktionssymbol 18 zusammenarbeitet. Die Ein-/Aus-Schalter 8, 9 sind als Drucktastenschalter ausgebildet, deren Drucktasten 19, 20 jeweils ein beleuchtbares opakes Suchsymbol 21 bzw. 22 und ein beleuchtbares opakes Funktionssymbol 23 bzw. 24 aufnehmen.

Der Betätigungsknopf 4 des Dreh-Zug-Schalters 3 ist über eine Klipsverbindung 25 mit einer drehbar und längsverschiebbar im Gehäuse 1 gehaltenen Schaltachse 26 verbunden. Unterhalb des Betätigungsknopfes 4 weist das Geähuse 1 diametral gegenüberliegende, radiale Durchgänge 27 auf, in die jeweils ein kugelförmiges Rastelement 28 und eine Schraubendruckfeder 29 eingesetzt ist. Das eine Rastelement 28 wirkt mit Axialnuten 30 und das andere Rastelement 28 mit Radialnuten 31 zusammen. In jedem Durchgang 27 ist jeweils das eine Ende einer der Haltefedern 2 festgelegt, wobei sich das dem Rastelement 28 gegenüberliegende Ende der Schraubendruckfeder 29 jeweils an dem entsprechenden Ende der zugehörigen Haltefeder 2 abstützt. Auf der Schaltachse 26 ist über axiale Nut-Feder-Führungen 32 ein Dreh-Schaltglied 33 gelagert, in das als Kontaktplatinen ausgebildete Kontakte 34 eingespritzt sind, die segmentförmig über die Peripherie des Dreh-Schaltgliedes 34 vorstehen und deren Außenseiten als Kontaktbahnen mit Kontaktnieten 35 von Anschlußkontakten 36 zusammenwirken.

In das Gehäuse 1 ist über Klipsverbindungen 37 ein Sockel 38 eingesetzt, durch den sich die Anschlußkontakte 36 erstrekken. Am Boden des Sockels 38 ist ein Kontakthebel 39 einseitig gelagert, der aufgrund der Wirkung einer in den Boden des Sockels 38 eingesetzten Druckfeder 40 an der Unterseite der Schaltachse 26 im nichtgezogenen Zustand derselben anliegt. In dieser Stellung der Schaltachse 26 befindet sich der Kontakthebel 39 in dem freien Raum unterhalb benachbarter Vorsprünge 41 von zwei weiteren nebeneinanderliegenden Anschlußkontakten 42, die über Klemmeinrichtungen 43 mit einer Leiterplatte 44 verbunden sind. Wird zum Einschalten der Innenbeleuchtung der Betätigungsknopf 4 und damit die Schaltachse 26 gezogen, dann gibt diese den Kontakthebel 39 frei, wodurch der Kontakthebel 39 an den Vorsprüngen 41 der Anschlußkontakte 42 zur Anlage kommt und damit der entsprechende Schaltkreis geschlossen wird. Im übrigen ist die sich auf dem Sockel 38 abstützende Leiterplatte 44 sämtlichen Einzelschaltern zugeordnet und daher über weitere Klemmeinrichtungen 43 mit einer entsprechenden Anzahl an Anschlußkontakten 42 versehen.

Auf der Schaltachse 26 ist oberhalb des Dreh-Schaltgliedes 33 über Nut-Feder-Führungen 45 ein Lichtleiter 46 drehfest und axial lose gelagert, dem eine auf der Leiterplatte 44 angeordnete Lichtquelle 47 zugeordnet ist. Der Lichtleiter 46 weist eine bis kurz unterhalb des Suchsymbols 5 im Betätigungsknopf 4 geführte Lichtleitspitze 48 auf. Das untere Ende der Lichtleitspitze 48 geht über eine doppelte Abwinklung 49 in einen kreissegmentförmigen Flansch 50 über, der in horizontaler Ausrichtung kurz unterhalb der Funktionssymbole 6 im Gehäuse 1 verläuft. Unterhalb des Flansches 50 befindet sich die Lichtquelle 47. Der mit einem schwach lichtdurchlässigen Auftrag versehene Flansch 50 besitzt mittig eine ausgesparte Lichtdurchgangsöffnung, so daß in Abhängigkeit von der Position der Schaltachse 26 das ausgewählte Funktionssymbol 6 unter dem sich die Lichtdurchgangsöffnung befindet, stärker beleuchtet ist als die beiden anderen Funktionssymbole 6.

Des weiteren ist in dem Gehäuse 1 ein gemeinsamer Lichtleiter 51 für die Suchbeleuchtung der Regulierschalter 7, 10 sowie der Ein-/Aus-Schalter 8, 9 und der Funktionsbeleuchtung der Regulierschalter 7, 10 angeordnet. Der Fuß 52 dieses Lichtleiters 51 liegt unmittelbar oberhalb einer weiteren, in die Leiterplatte 44 eingesetzten Lichtquelle 53. Von dem Fuß 52 des Lichtleiters 51 aus erstrecken sich zwei Lichtleitstäbe 54 bis kurz unterhalb der Suchsymbole 11, 12 der Regulierschalter 7, 10. Weiterhin gehen von dem Fuß 52 des Lichtleiters 51 zwei Lichtleitstäbe 55 ab, die durch die Böden der Ein-/Aus-Schalter 8, 9 in dieselben hineinragen, wobei innerhalb der Ein-/Aus-Schalter 8, 9 jeweils ein gesonderter Lichtleitstab 56 angeordnet ist, der einerseits mit dem freien Ende des Lichtleitstabes 55 des Lichtleiters 51 fluchtet und andererseits kurz unterhalb des Suchsymbols 21 bzw. 22 der Drucktaste 19 bzw. 20 des entsprechenden Ein-/Aus-Schalters 8 bzw. 9 endet. Zusätzlich zu dem Lichtleitstab 56 befindet sich in jedem Ein-/Aus-Schalter 8, 9 ein weiterer Lichtleitstab 57, dessen unteres Ende unmittelbar oberhalb einer weiteren, auf der Leiterplatte 44 angeordneten Lichtquelle 58 und dessen oberes Ende kurz unterhalb des Funktionssymbols 23 bzw. 24 der Drucktaste 19 bzw. 20 liegt. Die beiden Lichtleitstäbe 56, 57 eines jeden Ein-/Aus-Schalters 8, 9 erstrecken sich durch ein schwenkbeweglich gelagertes, federbelastetes Rahmen-Schaltglied 59, dem eine Herzkurven-Steuerung 60 zugeordnet ist und das mit der durch Druckfedern 61 beaufschlagten Drucktaste 19 bzw. 20 zusammenwirkt. In das Rahmen-Schaltglied 59 ist eine federbelastete Kontaktrolle 62 eingesetzt, die über zugeordnete Kontaktbahnen 63 und über die Leiterplatte 44 mit Anschlußkontakten 42 in Verbindung steht. Die beiden Ein-/Aus-Schalter 8, 9 sind in einem gemeinsamen Gehäuse 64 mit einer Trennwand 65 untergebracht, das in eine entsprechende Aussparung 66 des Gehäuses 1 über eine Schwalbenschwanzführung 67 einsetzbar ist.

Der gemeinsame Lichtleiter 51 weist ferner zwei Lichtleitstäbe 68 auf, die jeweils endseitig in einen Lichtaustrittsring 69 übergehen. Der sich auf der Lagerachse 70 des Stellrades 13 bzw. 16 des entsprechenden Regulierschalters 7 bzw. 10 abstützt. Die mit einer geriffelten Oberfläche versehenen Lichtaustrittsringe 69 verlaufen kurz unterhalb der Peripherie der Stellräder 13, 16 mit den eingesetzten Funktionssymbolen 14, 17 und den im Gehäuse 1 eingesetzten Funktionssymbolen 15, 18. Jedes Stellrad 13, 16 trägt ein federbelastetes Rastelement 71, das mit einer zugehörigen, am Sockel 38 angeformten Rastbahn 72 bzw. 73 zusammenwirkt. Des weiteren ist in jedes Stellrad 13, 16 über einen drehbeweglich gelagerten Hebel 74 mit einer Schleiffeder 75 gekoppelt, die einen auf der Unterseite der Leiterplatte 44 aufgebrachten Widerstand beaufschlagt, über den die Leistungsaufnahme des elektrischen Verbrauchers für die Leuchtweiteneinstellung bzw. für die Helligkeitseinstellung der Armaturenbrettbeleuchtung gesteuert wird.

## Patentansprüche

1. Kraftfahrzeug-Lichtschalter mit einem in einem Gehäuse (1) untergebrachten Dreh-Zug-Schalter (3) für das Stand- sowie Fahrtlicht und die Innenbeleuchtung, dadurch gekennzeichnet, daß das Gehäuse (1) zusätzlich einen Regulierschalter (7) für die Leuchtweite, einen Ein-/Aus-Schalter (8) für das Nebellicht, einen Ein-/-Aus-Schalter (9) für das Nebelschlußlicht und einen Regulierschalter (10) für die Armaturenbrettbeleuchtung aufnimmt.

2. Kraftfahrzeug-Lichtschalter nach Anspruch 1, dadurch gekennzeichnet, daß das Gehäuse (1) über gegenüberliegende Haltefedern (2) in eine entsprechende Öffnung des Armaturenbrettes des Kraftfahrzeuges eingeklipst ist.

3. Kraftfahrzeug-Lichtschalter nach den Ansprüchen 1 und 2, dadurch gekennzeichnet, daß unterhalb des Dreh-Zug-Schalters (3) nebeneinanderliegend der Regulierschalter (7) für die Leuchtweite, der Ein-/Aus-Schalter (8) für das Nebellicht, der Ein-/Aus-Schalter (9) für das Nebelschlußlicht und der Regulierschalter (10) für die Armaturenbrettbeleuchtung angeordnet sind.

4. Kraftfahrzeug-Lichtschalter nach einem der Ansprüche 1 bis 3, dadurch gekennzeichnet, daß die beiden Regulierschalter (7, 10) gegenüberliegend zu den mittig nebeneinanderliegenden Ein-/Aus-Schaltern (8, 9) vorgesehen sind.

5. Kraftfahrzeug-Lichtschalter nach einem der Ansprüche 1 bis 4, dadurch gekennzeichnet, daß den einzelnen Schaltern (7, 8, 9, 10) jeweils eine Such- und eine Funktionsbeleuchtung zugeordnet ist.

6. Kraftfahrzeug-Lichtschalter nach einem der Ansprüche 1 bis 5, dadurch gekennzeichnet, daß die Lichtquellen (47, 53, 58) für die Such- und Funktionsbeleuchtung der Schalter (7, 8, 9, 10) auf einer gemeinsamen Leiterplatte (44) angeordnet sind, und daß die Lichtquellen (47, 53, 58) über Lichtleiter (46, 51, 57) die opaken Suchsymbole (5, 11, 12, 21, 22) und die opaken Funktionssymbole (6, 14, 15, 17, 18, 23, 24) der Schalter (3, 7, 8, 9, 10) beaufschlagen.

7. Kraftfahrzeug-Lichtschalter nach einem der Ansprüche 1 bis 6, dadurch gekennzeichnet, daß die Leiterplatte (44) sich auf einem in das Gehäuse (1) eingeklipsten, mit Anschlußkontakten (36, 42) versehenen Sockel (38) abstützt, wobei die Anschlußkontakte (42) über Klemmeinrichtungen (43) mit der Leiterplatte (44) verbunden sind.

8. Kraftfahrzeug-Lichtschalter nach einem der Ansprüche 1 bis 7, dadurch gekennzeichnet, daß der dem Dreh-Zug-Schalter (3) zugeordnete Lichtleiter (46) drehfest und axial lose auf einer drehbaren sowie axial verschiebbaren Schaltachse (26) des Dreh-Zug-Schalters (3) angeordnet ist.

9. Kraftfahrzeug-Lichtschalter nach einem der Ansprüche 1 bis 8, dadurch gekennzeichnet, daß der Lichtleiter (46) des Dreh-Zug-Schalters (3) eine dem Suchsymbol (5) im Betätigungsknopf (4) zugeordnete Lichtaustrittsspitze (48) und eine in Abhängigkeit von der Stellung der Schaltachse (26) einem bestimmten, von mehreren Funktionssymbolen (6) im Gehäuse (1) zugeordnete Lichtdurchgangsöffnung oberhalb der zugehörigen Lichtquelle (47) in einem kreissegmentförmigen, mit einem schwach lichtdurchlässigen Auftrag versehenen Flansch (50) aufweist.

10. Kraftfahrzeug-Lichtschalter nach einem der Ansprüche 1 bis 9, dadurch gekennzeichnet, daß für die Suchbeleuchtung der Regulierschalter (7, 10) und der Ein-/Aus-Schalter (8, 9) ein gemeinsamer Lichtleiter (51) vorgesehen ist, über den gleichzeitig die Funktions- und Suchbeleuchtung der Regulierschalter (7, 10) beaufschlagbar ist.

11. Kraftfahrzeug-Lichtschalter nach einem der Ansprüche 1 bis 10, dadurch gekennzeichnet, daß für die Funktionsbeleuchtung der Ein-/Aus-Schalter (8, 9) jeweils ein gesonderter Lichtleiter (57) vorgesehen ist.

12. Kraftfahrzeug-Lichtschalter nach einem der Ansprüche 1 bis 11, dadurch gekennzeichnet, daß der gemeinsame Lichtleiter (51) zum einen zwei bis zu den im Gehäuse (1) angeordneten Suchsymbolen (11, 12) geführte Lichtleitstäbe (54) und zum anderen zwei in die Böden der Ein-/Aus-Schalter (8, 9) hineinragende Lichtleitstäbe (55) ausweist, die mit in den Ein-/Aus-Schaltern (8, 9) eingesetzten Lichtstäben (56) korrespondieren, die jeweils dem in einer Drucktaste (19, 20) des entsprechenden Ein-/Aus-Schalters (8, 9) angeordneten Suchsymbol (21, 22) zugeordnet sind.

13. Kraftfahrzeug-Lichtschalter nach einem der Ansprüche 1 bis 12, dadurch gekennzeichnet, daß der gemeinsame Lichtleiter (51) zwei, der Funktionsbeleuchtung der Regulierschalter (7, 10) zugeordnete Lichtaustrittsringe (69) aufweist, wobei jeder Lichtaustrittsring (69) sowohl ein in ein Stellrad (13, 16) des zugehörigen Regulierschalters (7, 10) eingelassenes Funktionssymbol (14, 17) als auch mindestens ein in das Gehäuse (1) eingelassenes Funktionssymbol (15, 18) beaufschlagt.

14. Kraftfahrzeug-Lichtschalter nach einem der Ansprüche 1 bis 13, dadurch gekennzeichnet, daß die Lichtleiter für die Funktionsbeleuchtung der Ein-/Aus-Schalter (8, 9) jeweils aus einem Lichtleitstab (57) bestehen, der dem in der Drucktaste (19, 20) des entsprechenden Ein-/Aus-Schalters (8, 9) angeordneten Funktionssymbol (23, 24) zugeordnet ist.

15. Kraftfahrzeug-Lichtschalter nach einem der Ansprüche 1 bis 14, dadurch gekennzeichnet, daß auf der Schaltachse (26) des Dreh-Zug-Schalters (3) ein axial loses, Kontakte (34) tragendes und Anschlußkontakte (36) beaufschlagendes Dreh-Schaltglied (33) für verschiedene Lichtschaltstellungen befestigt ist, und das freie Ende der Schaltachse (26) mit einem am Boden des Sockels (38) einseitig gelagerten, federbelasteten und Anschlußkontakte (42) beaufschlagenden Kontakthebel (39) für die Innenbeleuchtung zusammenwirkt.

16. Kraftfahrzeug-Lichtschalter nach einem der Ansprüche 1 bis 15, dadurch gekennzeichnet, daß jeder Ein-/Aus-Schalter (8, 9) als Drucktastenschalter mit einem schwenkbeweglich gelagerten, federbelasteten Rahmen-Schaltglied (59) ausgebildet ist, dem eine Herzkurven-Steuerung (60) zugeordnet ist und das eine federbelastete, Anschlußkontakte (42) beaufschlagende Kontaktrolle (62) trägt.

17. Kraftfahrzeug-Lichtschalter nach einem der Ansprüche 1 bis 16, dadurch gekennzeichnet, daß die beiden Ein-/Aus-Schalter (8, 9) als in einem gemeinsamen Gehäuse (64) vormontierte Baueinheit in das Gehäuse (1) des Kraftfahrzeug-Lichtschalters eingesetzt sind.

18. Kraftfahrzeug-Lichtschalter nach einem der Ansprüche 1 bis 17, dadurch gekennzeichnet, daß jeder Regulierschalter (7, 10) ein elektrischer Schalter mit einem über eine Schleiffeder (75) einstellbaren Widerstand, der auf der Leiterplatte (44) aufgebracht ist, zum Steuern der Leistungsaufnahme elektrischer Verbraucher für die Leuchtweiteneinstellung bzw. für die Helligkeitseinstellung der Armaturenbrettbeleuchtung ist.

## Claims

1. Motor vehicle light switch, having a turn-pull switch (3), which is accommodated in a housing (1), for the sidelights, headlights and the interior lighting, characterised in that the housing (1) additionally accommodates a control switch (7) for the light range, an on-off switch (8) for a foglight, an on-off switch (9) for a rear foglight, and a control switch (10) for dashboard illumination.

2. Motor vehicle light switch according to claim 1, characterised in that the housing (1) is clipped into a corresponding opening in the dashboard of the motor vehicle via oppositely situated retaining springs (2).

3. Motor vehicle light switch according to claims 1 and 2, characterised in that the on-off switch (8) for the foglight, the on-off switch (9) for the rear foglight and the control switch (10) for the dashboard illumination are disposed adjacent one another beneath the turn-pull switch (3).

4. Motor vehicle light switch according to one of claims 1 to 3, characterised in that the two control switches (7, 10) are provided opposite the on-off switches (8, 9), which lie centrally adjacent one another.

5. Motor vehicle light switch according to one of claims 1 to 4, characterised in that a search illumination and a function illumination are associated with each of the individual switches (7, 8, 9, 10).

6. Motor vehicle light switch according to one of claims 1 to 5, characterised in that the light sources (47, 53, 58) for the search and function illumination of the switches (7, 8, 9, 10) are disposed on a common printed circuit board (44), and in that the light sources (47, 53, 58) act on the opaque search symbols (5, 11, 12, 21, 22) and on the opaque function symbols (6, 14, 15, 17, 18, 23, 24) of the switches (3, 7, 8, 9, 10) via photoconductors (46, 51, 57).

7. Motor vehicle light switch according to one of claims 1 to 6, characterised in that the printed circuit board (44) is supported on a base (38), which is clipped into the housing (1) and is provided with connection contacts (36, 42), the connection contacts (42) being connected to the printed circuit board (44) via clamping arrangements (43).

8. Motor vehicle light switch according to one of claims 1 to 7, characterised in that the photoconductor (46), associated with the turn-pull switch (3), is non-rotatably and axially loosely disposed on a rotatable and axially displaceable switching shaft (26) of the turn-pull switch (3).

9. Motor vehicle light switch according to one of claims 1 to 8, characterised in that the photoconductor (46) of the turn-pull switch (3) includes a light-emitting tip (48), associated with the search symbol (5) in the operating knob (4), and a light slot, which is associated with one specific symbol of a plurality of function symbols (6) in the housing (1) in dependence on the position of the switching shaft (26), above the associated light source (47) in a circular segment-shaped flange (50) provided with a slightly transparent coating.

10. Motor vehicle light switch according to one of claims 1 to 9, characterised in that a common photoconductor (51) is provided for the search illumination of the control switches (7, 10) and of the on-off switches (8, 9), the function and search illumination of the control switches (7, 10) being able to be acted upon simultaneously via said photoconductor.

11. Motor vehicle light switch according to one of claims 1 to 10, characterised in that a separate photoconductor (57) is provided for the function illumination of each of the on-off switches (8, 9).

12. Motor vehicle light switch according to one of claims 1 to 11, characterised in that the common photoconductor (51) includes, on the one hand, two light-conducting rods (54), which extend to the search symbols (11, 12) disposed in the housing (1), and, on the other hand, two light-conducting rods (55), which protrude into the bases of the on-off switches (8, 9) and correspond to light rods (56), which are inserted in the on-off switches (8, 9) and are each associated with the search symbol (21, 22) disposed in a push-button (19, 20) of the corresponding on-off switch (8, 9).

13. Motor vehicle light switch according to one of claims 1 to 12, characterised in that the common photoconductor (51) includes two light-emitting rings (69), which are associated with the function illumination of the control switches (7, 10), each light-emitting ring (69) acting upon both a function symbol (14, 17), which is inserted in an adjusting wheel (13, 16) of the associated control switch (7, 10), and at least one function symbol (15, 18) inserted in the housing (1).

14. Motor vehicle light switch according to one of claims 1 to 13, characterised in that the photoconductors for the function illumination of the on-off switches (8, 9) each comprise a light-conducting rod (57), which is associated with the function symbol (23, 24) disposed in the push-button (19, 20) of the corresponding on-off switch (8, 9).

15. Motor vehicle light switch according to one of claims 1 to 14, characterised in that an axially loose rotary switching member (33), which carries contacts (34) and acts on connection contacts (36), for various light switching positions is mounted on the switching shaft (26) of the turn-pull switch (3), and the free end of the switching shaft (26) co-operates with a spring-loaded contact lever (39) for the interior lighting, said lever being mounted on one side of the bottom of the base (38) and acting upon connection contacts (42).

16. Motor vehicle light switch according to one of claims 1 to 15, characterised in that each on-off switch (8, 9) is configured as a push-button switch having a pivotally mounted, spring-loaded frame switching member (59), which has a cardioid control (60) associated therewith and a spring-loaded contact roller (62), which acts upon connection contacts (42).

17. Motor vehicle light switch according to one of claims 1 to 16, characterised in that the two on-off switches (8, 9) are inserted into the housing (1) of the motor vehicle light switch as a structural unit premounted in a common housing (64).

18. Motor vehicle light switch according to one of claims 1 to 17, characterised in that each control switch (7, 10) is an electrical switch having a resistor, which is adjustable via a contact spring (75) and is mounted on the printed circuit board (44), for controlling the power required by electrical consuming devices for adjusting the light range or respectively for adjusting the brightness of the dashboard illumination.

## Revendications

1. Commutateur d'éclairage de véhicule avec un commutateur tournant et à traction (3), logé dans un boîtier (1), pour les feux de stationnement et de marche et d'éclairage intérieur, caractérisé en ce que le boîtier (1) loge en outre un régulateur (7) pour la portée d'éclairage, un interrupteur marche/arrêt (8) pour les phares antibrouillard, un interrupteur marche/arrêt (9) pour les phares antibrouillard arrière et un régulateur (10) pour l'éclairage du tableau de bord.

2. Commutateur d'éclairage pour véhicule selon la revendication 1, caractérisé en ce que le boîtier (1) est clipsé par des ressorts de maintien (2) se faisant face dans une ouverture correspondante du tableau de bord du véhicule.

3. Commutateur d'éclairage pour véhicule selon les revendications 1 et 2, caractérisé en ce qu'au-dessous du commutateur tournant et à traction (3) sont montés côte à côte le régulateur (7) pour la portée d'éclairage, l'interrupteur marche/arrêt (8) pour les phares antibrouillard, l'interrupteur marche/arrêt (9) pour les phares antibrouillard arrière et le régulateur (10) pour l'éclairage du tableau de bord.

4. Commutateur d'éclairage pour véhicule selon l'une des revendications 1 à 3, caractérisé en ce que les deux régulateurs (7, 10) sont prévus en vis-à-vis des interrupteurs marche/arrêt (8, 9) juxtaposés au milieu.

5. Commutateur d'éclairage pour véhicule selon l'une des revendications 1 à 4, caractérisé en ce qu'à chacun des différents interrupteurs (7, 8, 9, 10) est associé un éclairage de recherche et un éclairage de fonction.

6. Commutateur d'éclairage pour véhicule selon l'une des revendications 1 à 5, caractérisé en ce que les sources lumineuses (47, 53, 58) pour l'éclairage de recherche et l'éclairage de fonction des interrupteurs (7, 8, 9, 10) sont placées sur une plaque de circuits imprimés (44) commune, et en ce que les sources lumineuses (47, 53, 58) sollicitent, par des guides de lumière (46, 51, 57), les symboles de recherche opaques (5, 11, 12, 21, 22) et les symboles de fonction opaques (6, 14, 15, 17, 18, 23, 24) des interrupteurs (3, 7, 8, 9, 10).

7. Commutateur d'éclairage pour véhicule selon l'une des revendications 1 à 6, caractérisé en ce que la plaque de circuits imprimés (44) prend appui sur un socle (38) clipsé dans le boîtier (1), pourvu de contacts de branchement (36, 42), les contacts de branchement (42) étant reliés à la plaque de circuits imprimés (44), par des moyens de serrage (43).

8. Commutateur d'éclairage pour véhicule selon l'une des revendications 1 à 7, caractérisé en ce que le guide de lumière (46), associé à l'interrupteur tournant et à traction (3), est monté fixe en rotation et libre axialement sur un axe de commutation (26) tournant et déplaçable axialement de l'interrupteur tournant et à traction (3).

9. Commutateur d'éclairage pour véhicule selon l'une des revendications 1 à 8, caractérisé en ce que le guide de lumière (46) de l'interrupteur tournant et à traction (3) présente une pointe de sortie de lumière (48) associée au symbole de recherche (5) dans le bouton d'actionnement (4) et un orifice de passage de lumière associé, en fonction de la position de l'axe de commutation (26), à un symbole de fonction déterminé parmi plusieurs symboles de fonction (6) dans le boîtier (1), au-dessus de la source lumineuse (47) correspondante, dans une bride (50) en forme de segment de cercle, pourvue d'une couche légèrement translucide.

10. Commutateur d'éclairage pour véhicule selon l'une des revendications 1 à 9, caractérisé en ce que pour l'éclairage de recherche des régulateurs (7, 10) et des interrupteurs marche/arrêt (8, 9) il est prévu un guide de lumière commun (51), par lequel peut être sollicité simultanément l'éclairage de fonction et l'éclairage de recherche des régulateurs (7, 10).

11. Commutateur d'éclairage pour véhicule selon l'une des revendications 1 à 10, caractérisé en ce que pour l'éclairage de fonction de chacun des interrupteurs marche/arrêt (8, 9) il est prévu un guide de lumière (57) séparé.

12. Commutateur d'éclairage pour véhicule selon l'une des revendications 1 à 11, caractérisé en ce que le guide de lumière commun (51) comporte d'une part deux barres de guide de lumière (54) allant jusqu'aux symboles de recherche (11, 12) placés dans le boîtier (1) et d'autre part, deux barres de guide de lumière (55) pénétrant dans les fonds des interrupteurs marche/arrêt (8, 9), qui correspondent aux barres de lumière (56) insérées dans les interrupteurs marche/arrêt (8, 9), qui sont associées chacune au symbole de recherche (21, 22) placé dans un bouton-poussoir (19, 20) de l'interrupteur marche/arrêt (8, 9) correspondant.

13. Commutateur d'éclairage pour véhicule selon l'une des revendications 1 à 12, caractérisé en ce que le guide de lumière commun (51) comporte deux anneaux de sortie de lumière (69) associés à l'éclairage de fonction des régulateurs (7, 10), chaque anneau de sortie de lumière (69) sollicitant aussi bien un symbole de fonction (14, 17) encastré dans une roue de réglage (13, 16) du régulateur associé (7, 10), ainsi qu'au moins un symbole de fonction (15, 18) encastré dans le boîtier (1).

14. Commutateur d'éclairage pour véhicule selon l'une des revendications 1 à 13, caractérisé en ce que les guides de lumière pour l'éclairage de fonction des interrupteurs marche/arrêt (8, 9) sont constitués chacun d'une barre de guide de lumière (57), qui est associée au symbole de fonction (23, 24) placé dans le bouton-poussoir (19, 20) de l'interrupteur marche/arrêt (8, 9) correspondant.

15. Commutateur d'éclairage pour véhicule selon l'une des revendications 1 à 14, caractérisé en ce que sur l'axe de commutation (26) de l'interrupteur tournant et à traction (3) est fixé un organe de commutation tournant (33) axialement libre, portant des contacts (34) et agissant sur des contacts de branchement (36) pour différentes positions de commutation de lumière, et l'extrémité libre de l'axe de commutation (26) coopère avec un levier de contact (39) monté d'un côté sur le fond du socle (38), soumis à l'action d'un ressort et agissant sur des contacts de branchement (42), pour l'éclairage intérieur.

16. Commutateur d'éclairage pour véhicule selon l'une des revendications 1 à 15, caractérisé en ce que chaque interrupteur marche/arrêt (8, 9) est conformé en interrupteur à bouton-poussoir avec un organe de commutation en cadre (59) monté pivotant, soumis à l'action d'un ressort, auquel est associée une commande à courbe en coeur (60) et qui porte un galet de contact (62) soumis à l'action d'un ressort, agissant sur des contacts de branchement (42).

17. Commutateur d'éclairage pour véhicule selon l'une des revendications 1 à 16, caractérisé en ce que les deux interrupteurs marche/arrêt (8, 9) sont insérés en tant qu'unité de construction prémontée dans un boîtier (64) commun, dans le boîtier (1) du commutateur d'éclairage pour véhicule.

18. Commutateur d'éclairage pour véhicule selon l'une des revendications 1 à 17, caractérisé en ce que chaque régulateur (7, 10) est un interrupteur électrique avec une résistance réglable par un ressort frotteur (75), qui est appliquée sur la plaque de circuits imprimés (44), en vue de la commande de la consommation de puissance de récepteurs électriques pour le réglage de la portée d'éclairage ou pour le réglage de la luminosité de l'éclairage du tableau de bord.
